(19) **Europäisches Patentamt / European Patent Office / Office européen des brevets**

(11) **EP 1 551 038 B1**

(12) **EUROPEAN PATENT SPECIFICATION**

(45) Date of publication and mention
of the grant of the patent:
**21.10.2009 Bulletin 2009/43**

(51) Int Cl.:
**H01B 12/00** (2006.01)

(21) Application number: **03380313.1**

(22) Date of filing: **31.12.2003**

(54) **Superconducting power cable with enhanced superconducting core**

Supraleitendes Energiekabel mit einem verbesserten supraleitenden Kern

Câble d' énergie supraconducteur avec âme supraconductrice améliorée

(84) Designated Contracting States:
**AT BE BG CH CY CZ DE DK EE ES FI FR GB GR HU IE IT LI LU MC NL PT RO SE SI SK TR**

(43) Date of publication of application:
**06.07.2005 Bulletin 2005/27**

(73) Proprietor: **Servicios Condumex S.A.**
**C.P.76120 Queretaro, Qro. (MX)**

(72) Inventors:
• **Pérez Sanchez, Alfonso**
**Jurica C.P. 76120 Querétaro, Qro. (MX)**
• **Nieto Sanchez, José Luis**
**Jurica C.P. 76120 Querétaro, Qro. (MX)**
• **Maya Mendez, Mauro Eduardo**
**Jurica C.P. 76120 Querétaro, Qro. (MX)**

(74) Representative: **Pons Ariño, Angel**
**Pons Patentes y Marcas Internacional, S.L.**
**Glorieta Ruben Dario 4**
**28010 Madrid (ES)**

(56) References cited:
**WO-A-02/23557**            **US-A- 3 866 315**
**US-A1- 2002 098 985**

• **WESCHE R ET AL: "Design of superconducting power cables" CRYOGENICS, IPC SCIENCE AND TECHNOLOGY PRESS LTD. GUILDFORD, GB, vol. 39, no. 9, 1 September 1999 (1999-09-01), pages 767-775, XP004244007 ISSN: 0011-2275**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the Invention

The instant invention relates to the conduction of electric power and particularly to the manufacturing of a superconducting power cable of at least one phase, characterized by a central core based on a superconducting tape material BSCCO of 22233 ($Bi_2$ $Sr_2$ $Ca_2$ $Cu_3$ $O_x$) commercial composition giving a minimum current density of 7 KA/cm$^2$ under the criteria of 1 $\mu$V/cm. It also includes an annular space of thermal insulation system wherein the corrugated casing of the system presents a vacuum pressure below 10 mPa (milliPascals) permitting the thermal insulation to maintain operating temperatures of 77°K (temperature of liquid nitrogen under atmospheric pressure) throughout the cross section of the cable in its superconducting part.

### Previous Art

The invention relates to the transportation of electric power in superconducting conditions, zero resistance in direct current. This invention replaces the use of power cables for distribution and transmission in voltages from 15 kV upwards because it presents lower conduction losses.

High temperature superconductors can be important aspects of technological advances, because equipment and devices could have superconducting parts in their components. An obvious application in superconducting state is the use of zero resistance properties to the passage of direct current and low power losses in the electricity transmission. In the present transmission lines, electric power is lost through heat when the current passes through normal conductors. If electricity is transmitted through superconducting cables, said losses can be reduced or eliminated with the subsequent savings in the energy costs. This can be applied to any electric component having cooper leads, for examples, motors, transformers, generators and any equipment involved with electric power.

Some US and Japanese companies have manufactured and evaluated superconducting cable models of up to 5000 cm obtaining current values not exceeding 1700 A to 2000 A. Tests conducted in 5000 cm long segments have shown problems related to current distribution among layers. Said distribution tends to be irregular because of electromagnetic problems related to the lead itself.

Patent WO 00/39813 describes a superconducting cable using high temperature superconducting materials HTS with flexible core. However it applies to a traditional coaxial design with insulated HTS tape layers and cold design. Japanese Patent 06239937 A2 describes a superconducting cable with HTS materials and flexible core but involving a traditional DC (direct current) design and insulation between each HTS tape layer.
Patent US 5,929,385 describes a superconducting cable similar to the object of the instant invention but only as far as the type of materials used is concerned. US Patent 5,952,614 also describes a superconducting cable similar as far as the use of HTS materials and flexible core are concerned but with a coaxial design, in cold conditions and with HTS tape traditional design. For these reasons, said inventions are different from the characteristics of the instant invention.

The article "Design of superconducting power cables" CRYOGENICS, IPC SCIENCE AND TECHNOLOGY PRESS LTD. GUILFORD, GB, vol. 39, no. 9, 1 September 1999, pages 767-775, XP004244007 ISSN: 0011-2275 discloses a cable (three phases) and it makes reference to the loss of superconducting cables with different estequiometrias and operation temperatures, comments on the design of monophase superconducting cables (115 kW) for transmission are also made.

In view of the drawings of the prior art, there is a need of an optimized supeconducting cable with multi-layer superconducting tapes which guarantees a more uniform distribution of the current between several layers, thereby maximising the use of the superconducting material and achieving a higher level of critical current.

This problem is solved by a superconducting cable according to the features of claim 1, wherein a series of two or more superconducting tapes wounded in one direction is covered by a second series of two or more superconducting tapes wounded in the opposite direction.

### DESCRIPTION OF THE INVENTION

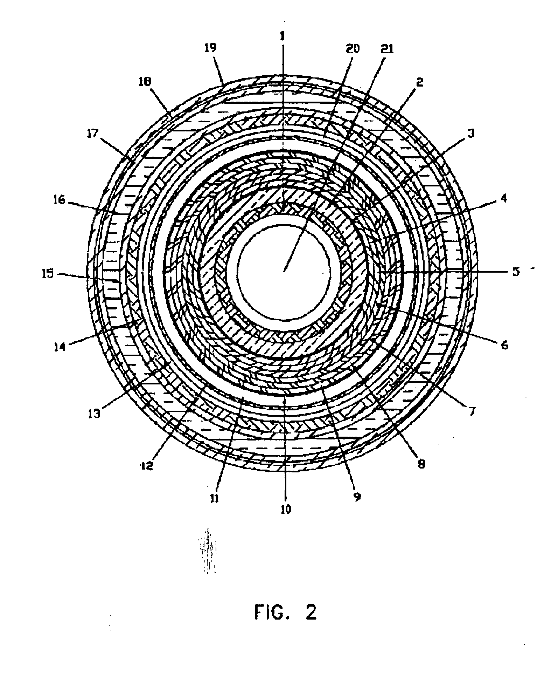

Hereinafter the invention will be described in connection with the drawings of figures 1 to 6, wherein:

Figure 1 is a perspective view with cross section showing the different layers of the superconducting power cable.
Figure 2 is a cross section view of Figure 1.
Figure 3 is a perspective view with cross section of the vacuum section of the central core thermal protection.
Figure 4 is a perspective view with cross section of Figure 3 showing the opposite wall of the thermal insulation.
Figure 5 is a perspective view with cross section of the superconducting power cable core.
Figure 6 is a perspective view with longitudinal cross section of Figure 1, showing the annular space of thermal insulation.

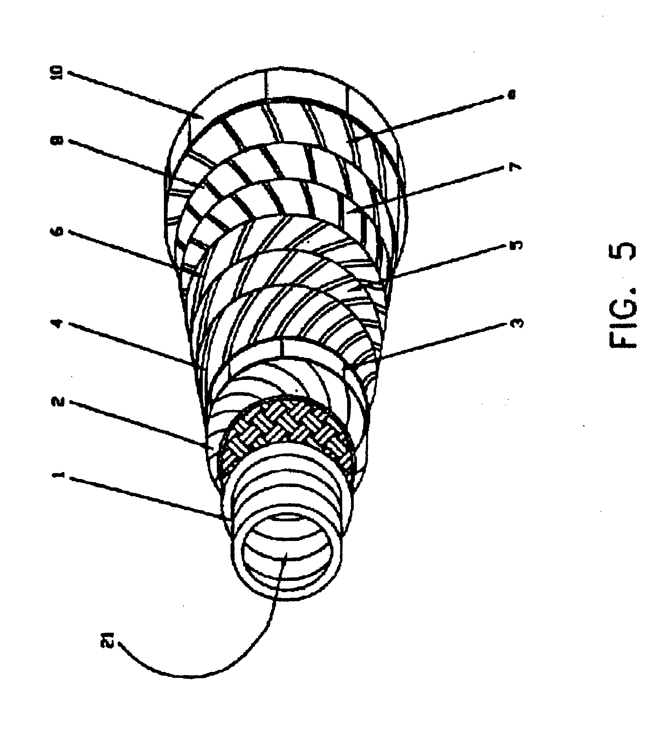

The invention is related to the transportation of electricity in superconducting conditions, (zero resistance in direct current). This invention replaces the use of power cables for distribution and transmission in voltages of 15 kV or more because it presents lower conduction power losses, considering that for a Cu lead with a current density of 1 - 4 A/mm$^2$ and a resistivity of 2 x 10$^{-8}$ $\Omega$m, the transmission losses are on the order of 20 - 80 mW/Am. To better compare with superconducting cables, losses caused by the heating of superconducting materials have to be taken into account. At cryogenic temperatures, said losses are defined by a Carnot factor divided between the efficiency of the cooling system. In the case of liquid nitrogen, this factor is between 10 and 20. Thus, in a superconductor losses will be lower than 5 mW/Am. The flow of liquid nitrogen fills the longitudinal cavity 21, Fig. 5, of the flexible corrugated pipe 1 of 304 or 316 stainless steel. Said pipe can have an external diameter between 2 cm and 6 cm and an internal diameter between 1 cm and 4 cm wherein the depth of the corrugation can vary between 0.5 cm and 1 cm. The corrugation pitch can be between 0.8 and 1.5 cm for a corrugation depth between 0.4 and 0.5 cm. As another alternative for a depth between 0.4 and 0.6 cm, the corrugation pitch can be between 1.6 and 3 cm. On this pipe, a 304 or 316 stainless steel mesh is placed in order to obtain a relatively flat surface. On this mesh a stainless steel tape layer 2 is placed, between 4 and 5 cm wide and between 0.0005 and 0.006 cm thick. They are placed on the corrugated pipe with spacing between 0.15 and 0.2 cm. Then one or two additional stainless steel tapes, 2.5 to 4 cm wide and 0.001 to 0.002 cm thick, are placed with spacing between the tapes of 0.1 to 0.15 cm. After, a first layer of Cu tapes 3 is placed, from 0.25 to 0.40 cm wide and from 0.025 to 0.030 cm thick, with a cabling length between 2 cm and 100 cm depending on the design of the first layer of superconducting tapes to be applied. Said layer of Cu tapes can be laid at an angle ranging from 0° to 45° depending on the cable design. The superconducting material to be used is made of tapes of a 22233 (Bi$_2$ SR$_2$ Ca$_2$ Cu$_3$ O$_x$) composition commercial product BSCCO. Said tapes range in width between 0.38 and 0.42 cm and in thickness between 0.018 and 0.022 cm, which gives a minimum current density of 7 kAcm$^2$ under the criteria of 1$\mu$V/cm, (microvolt/centimeter). With this superconducting material, two or more layers of tapes are laid with a cabling lay length between 20 cm and 300 cm, at an angle ranging from 0° to 45° depending on the design of each layer with a direction that can be right or left 4, 5, 6. And two or more layers of superconducting material tape with a lay length between 20 cm and 300 cm with an angle ranging from 0° to 45° depending on the design of each layer with a direction that can be right or left with regard to the cabling, in the opposite direction of the previously placed layers 7, 8, 9. Finally, a wrapping tape made of insulating material 10, with a thickness ranging between 0.005 and 0.01 cm and a width ranging between 2 and 4 cm is laid.

In order to protect the central core, the superconducting power cable object of the instant invention is also characterized because it includes a vacuum thermal insulation system consisting of a flexible corrugated pipe 11 made of 304 or 316 stainless steel, to hold the superconducting cable and liquid nitrogen. Said pipe can have an external diameter ranging between 4 cm and 8 cm and an internal diameter ranging between 3 cm and 7 cm, the corrugation depth varying between 0.5 cm and 1 cm. The corrugation pitch can vary between 1 cm and 2 cm for a corrugation depth between 0.5 and 0.8 cm. Then, on the periphery of this pipe, a multi layer thermal insulation ($\rho_a$) 12 is applied, which can have a thickness ranging between 0.0005 cm and 0.005 cm which is calculated according to the following formula:

$$\rho_a = (S_s + \rho_r t_r)(N/\Delta x)$$

wherein:

$\rho_a$      Thickness of the insulating layer

$S_s$      Mass of the material per area unit

$\rho_r$      Insulating material density

$t_r$      Thickness of the anti-radiation casing

$N/\Delta x$      Layer density

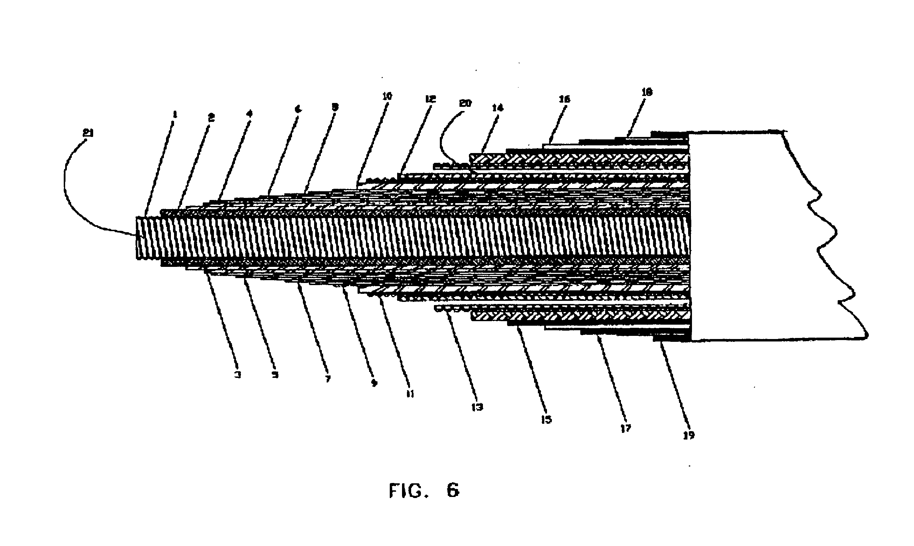

Concentrically around the flexible corrugated pipe 11, covered with the insulating material 12, a second corrugated pipe 13 is placed, creating the vacuum thermal insulation space 20, Figure 6.

To ensure the adequate functioning of the thermal insulation system at a temperature of 77°K, a vacuum pressure below 10 mPa (milliPascals) is required.

Said second corrugated pipe 13, which creates the vacuum space, is made of 304 or 316 stainless steel which can have and external diameter ranging between 8 cm and 10 cm and an internal diameter ranging between 6 and 7 cm, wherein the depth of the corrugations may vary between 0.5 cm and 1.5 cm. The corrugation pitch can be between 1 and 2 cm for a corrugation depth between 0.5 and 1 cm.

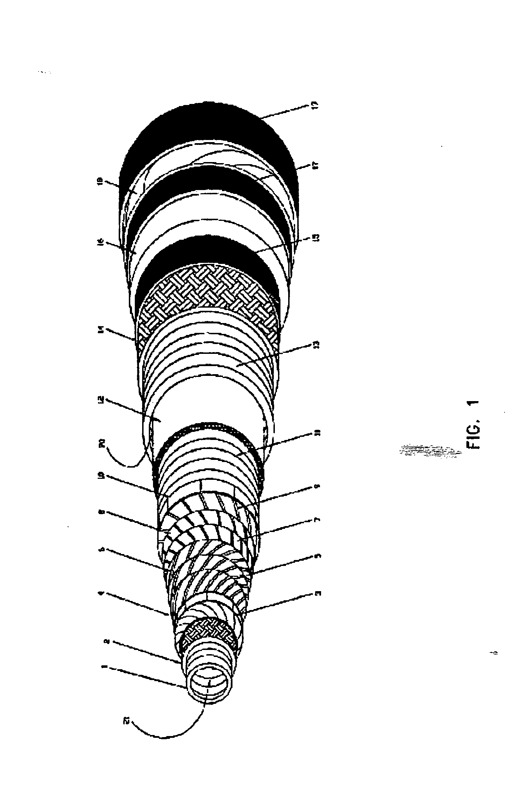

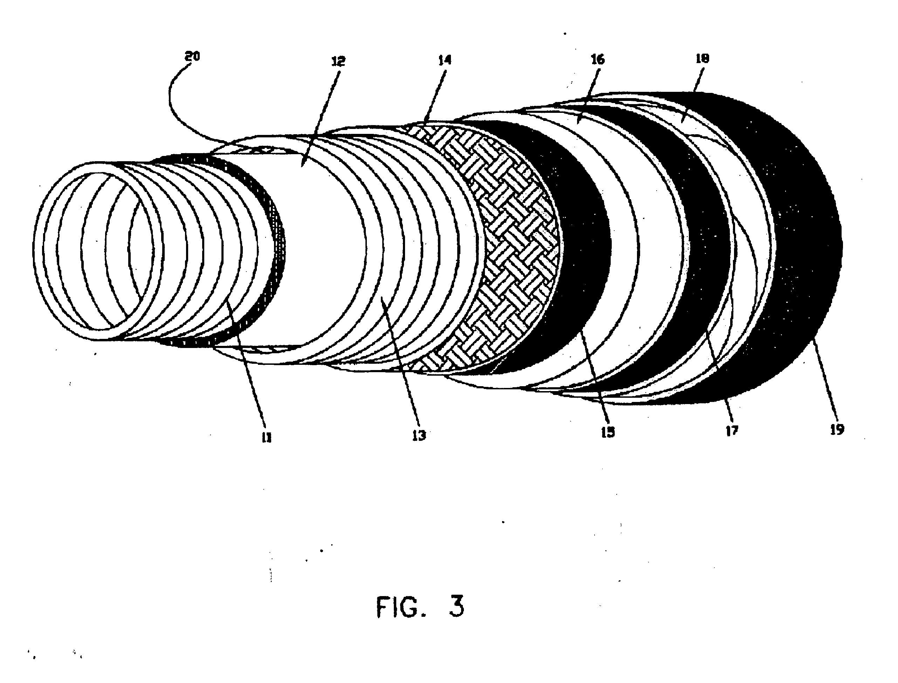

The thermal insulation system includes also on the external wall of the corrugated pipe 13, a braided stainless steel mesh 14, Fig. 1 and 3, offering a uniform surface to the external wall structure of the helical or spiral shaped corrugated pipe.

Around the uniform mesh surface 14, an internal semiconducting shield 15 is applied, which is made of low density thermoplastic polyethylene or any other thermoplastic or thermosetting semiconducting material. The conductivity of said shield should not exceed 1000 $\Omega$ m when it is measured at room temperature, said shield having a thickness of at least 0.006 cm. On this semiconducting shield the electric insulation of the cable 16 is placed.

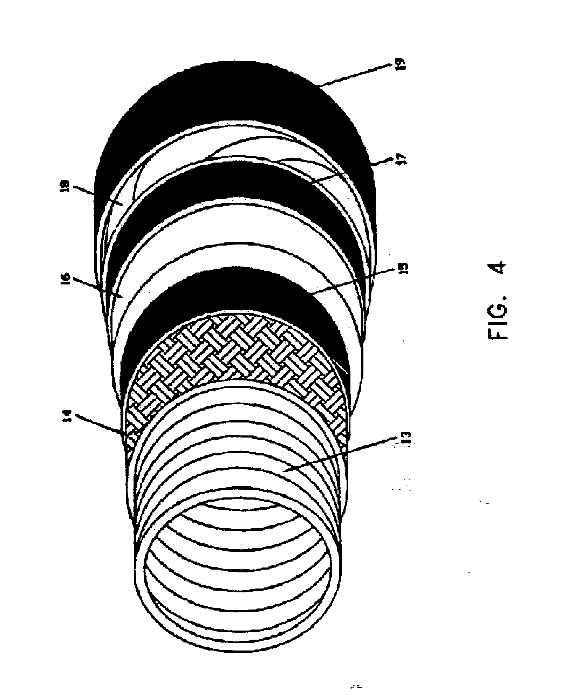

Said electric insulation is based on low, medium or high density, thermoplastic or thermosetting or crossed chain polyethylene and/o Ethylene Propylene (EP), the thickness of the insulation being between 0.229 cm and 0.976 cm depending on the operation voltage level of the cable. On this electric insulation, a second semiconducting shield 17 made of the same materials as the internal semiconducting shield 15 is placed, Figure 4. However, in this case, the thickness of the shield must be at least 0.0129 cm and has to fulfill a maximum volume resistivity of 500 $\Omega$ m when measured at room temperature. On this layer, a metal shield made of Cu tape 18 is placed, which must be at least 0.0635 cm thick, having a cross section area of at least 0.1 mm$^2$/mm. On this metal shield 18, a protective casing 19 is placed, possibly made of polyethylene or polyvinyl chloride (PVC) depending on the application of cable, said casing having a thickness ranging between 0.203 and 0.279 cm.

According to the technical requirements, the basic superconductor design parameters used were as follows:

* Tape Width (cm): $0.4 \pm 0.02$

* Tape Thickness (cm): $0.02 \pm 0.002$

* Critical current Density (kA/cm$^2$)>7 (criterion of 1$\mu$V/cm)

* Filamentary section thickness inside the tape $2b_{sc}$(cm): 0.018

* Critical current in the bending deformation voltage value: 0.1% - not below 95% or 0.2% - not below 90%.

* About 20% reduction in the critical current when the field is between 0T and 0.1T.

The basic equations to compute the number of superconducting tapes and the design parameters are as follows: Number of tapes per layer (Ni)

$$Ni = \frac{\pi x Dio x COS\beta i}{2ai(1+Si)}$$

wherein:

$D_{io}$ =   average diameter of the i layer

$2_{ai}$ =   Tape Width of the i layer

$S_i$ =   Relative space between the tapes of the i layer

$\beta_i$ =   Laying angle of the superconducting tapes

Lay of the tapes in a layer (Pí)

$$Pi = \frac{\pi x Dio}{\tan \beta i}$$

Relative spacing between the tapes of a layer: (Sí)

$$Si = \frac{\pi x Dio x Cos \beta i}{2aixNi}$$

Relative deformation voltage $\varepsilon_i$ regarding the superconductor in bending conditions of the tapes is:

$$\varepsilon_i = 2bscx \operatorname{sen} \beta / Dio$$

The model base of the superconducting high temperature cable has been developed, which consists of the design of the superconducting core itself, as well as the development of insulation based on known and previously developed materials for use in medium and high voltage power cables.

**Example 1**

Under the design conditions, the superconducting tape VAC (Germany) was chosen. Said tape presents a critical current of 59.8 A to 64.7 A depending on the combination of thickness and width of the superconducting tape. Based on these variations, the criteria of linearity of the critical current density used for the cable optimization and calculation is not very congruent, and thus a value of the critical current density in the external magnetic field equals to cero is accepted as 113 A/cm for cable calculations. Taking into account said variations, the followings values were taken as parameters for the calculation.

* External Diameter of the core $D_{fe}$ = 5.5 cm;

* Tape thickness $2b_t$ = 0.002 cm;

* Filament section thickness inside the tape $2b_{sc}$ = 0.018 cm;

* Relative space between each tape in each layer S = 0.05.

The minimum lay of the tapes (maximum angle of tape laying) is selected based on the limitations imposed by the deformation voltage threshold with regard to bending, for a superconductor when the tapes in one layer are bent on a diameter $D_i$ and the tape laying angle $\beta_i$ is at a maximum permissible value ($\varepsilon$ <0.2 %, wherein $\varepsilon = 2b_{sc}\cos\beta_i/D_i$). The critical current of the cable is expected to be between 6 kA and 10 kA, under the criteria of 1 $\mu$V/cm and the approximate values of the magnetic field induction on the surface of the sixth layer being between 0.04 T and 0.07 T. For this reason for every 0.001 T increase, the critical current reduction of the tape is expected to be 2% its initial value.

The influence of the deformation voltage on the superconductor with regard to the value of the tape critical current during the manufacturing of cable is described in the comments on Table No. 1.

**Table No. 1**

| Expected manufacturing results | | | | | | | | |
|---|---|---|---|---|---|---|---|---|
| ($2_a$ = 0.38 cm, $2b_{sc}$ = 0.018 cm) | | | | | | | | |
| Layer Number | Di Bending Mm | $\varepsilon$ % | $N_i$ | $I_c$ Tape A | $I_{ci}$ A | $I_{ci}/I_{co}$ | $I_{maxi}$ REAL A | $S_i$ Real |
| 1 | 13.32 | 0.135 | 40 | 42.22 | 1688.8 | 0.1667 | 1672.3 | 0.0377 |
| 2 | 17.52 | 0.103 | 42 | 41.54 | 1744.7 | 0.1722 | 1727.6 | 0.0399 |
| 3 | 42.03 | 0.043 | 44 | 40.85 | 1797.4 | 0.1771 | 1779.8 | 0.0446 |

(continued)

| Expected manufacturing results | | | | | | | | |
| --- | --- | --- | --- | --- | --- | --- | --- | --- |
| ($2_a$ = 0.38 cm, $2b_{sc}$ = 0.018 cm) | | | | | | | | |
| Layer Number | Di Bending Mm | ε % | $N_i$ | $I_c$ Tape A | $I_{ci}$ A | $I_{ci}/I_{co}$ | $I_{maxi}$ REAL A | $S_i$ Real |
| 4 | 51.72 | 0.035 | 45 | 40.17 | 1807.7 | 0.1784 | 1790.0 | 0.0325 |
| 5 | 15.82 | 0.114 | 42 | 39.49 | 1658.6 | 0.1637 | 1642.3 | 0.0457 |
| 6 | 9.97 | 0.181 | 37 | 38.80 | 1435.6 | 0.1417 | 1435.6 | 0.0484 |
| Σ | | | | | 10132.8 | 1 | 10047.6 | |

According to the above table, it can be seen that the current value depends on the maximum deformation voltage if and only if it does not exceed the deformation value of 0.2% which is the critical value of the current. From the results obtained in the above table, we observe that there is uniform current distribution in every layer, which gives a current distribution factor $I_{ci}/I_{co}$ = 1 and a real maximum critical current value of $I_{MAX\ REAL}$ = 10047 A.

**Example 2**

However, in Table No. 2, the optimization results of the cable are presented as the criteria to reach the peak critical current value and the minimization of the energy losses under the influence of the flow and axial magnetic field.

**Table No. 2**

| Optimization Results | | | | | | | |
| --- | --- | --- | --- | --- | --- | --- | --- |
| **Layer Number** | **$D_i$ Exterior Cm** | **Tape laying direction** | **$J_{ct}$ A/cm** | **$β_i$ degrees** | **$P_f$ cm** | **$I_{calc}$ $I_i/I_o$** | **$J_i$** |
| **1** | **5.554** | *L/1* | **111.11** | **24.6** | **37.89** | **0.1671** | **1.0000** |
| **2** | **5.588** | *L/1* | **109.31** | **18.6** | **51.96** | **0.1716** | **0.9938** |
| **3** | **5.632** | *L/1* | **107.51** | **7.70** | **130.35** | **0.1765** | **0.9859** |
| **4** | **5.676** | *R/-1* | **105.71** | **6.30** | **160.89** | **0.1769** | **0.9941** |
| **5** | **5.720** | *R/-1* | **103.91** | **21.2** | **46.15** | **0.1648** | **0.9967** |
| **6** | **5.764** | *R/-1* | **102.11** | **35.3** | **25.48** | **0.1431** | **0.9985** |
| Σ | **5.764** | | | | | **1.0000** | **0.9948** |

Maximum current reached $I_{MAX}$ = 10028.5

Total sum of the utilization coefficient in the six layers $K_{MAX} = Σ_{ji}$ = 5.96689
And according to the above mentioned criteria, current distribution is uniform in all the cable layers, and the losses caused by the axial magnetic field are minimized.
Wherein:
$D_i$ exterior = external diameter of the i layer
$J_{ci}$ = Density of the lineal critical current for the tapes of the i layer
$β_i$ = Tape laying angle for the tapes of the i layer
$P_i$ = Tape lay for the tapes of the i layer
$N_i$ = Number of tapes in the i layer
$I_{ci}$ = Total critical current of all the tapes in the i layer (current i layer) versus the total number of tapes (sum of the critical currents of all the tapes) in the model.
$I_{calc} = I_i/I_o$ Current distribution in the i layer of the total current.
$N_i/N_o = I_{ci}/I_{co}$ = Number of tapes in the i layer (critical current in the i layer) versus the total number of tapes (sum of the critical currents of all the tapes) in the model.
$I_{max}$ REAL = Real value of the current peak in the i layer when the current reaches its critical value in at least one of the layers.
$J_i$ = Superconductor utilization coefficient in the i layer.

**Claims**

1. A superconducting power cable with an enhanced superconducting core of at least one phase having nitrogenflow cooling in the cavity of a central pipe composed of a first and a second tubular sections,
the first tubular section being a flexible superconducting central core formed by a first flexible corrugated central pipe (1) coated with stainless steel mesh tapes (2), overlaid with layers of copper tapes (3), overlaid with layers of superconducting material coiled at winding angles of between 0 and 45 degrees, the abovementioned assembly being joined with a tape of insulating material (10), while
the second tubular section is a thermal insulation system protesting the central core and is formed concentrically by a second flexible, corrugated stainless steel pipe (11) covered with a multi-layer thermal insulation (12), complemented with an additional stainless steel, corrugated pipe (13), separated from the multi-layer thermal insulation (12) by a vacuum thermal insulation space (20), the outer wall of the corrugating pipe (13) having a stainless steel mesh (14) for the purpose of adhering several layers, said layers being formed by; a first semi-conducting shield (15) made of thermoplastic or thermosetting low density polyethylene, an insulation (16), a second semi-conducting shield (17), a metal shield composed of a copper tape (18) and a protective cover (19) made of polythene,
**characterised in that** on top of the copper tapes (3) of the first tubular section, the layers of superconducting material comprises a series of two or more tapes of superconducting material (4, 5, 6) wounded in one direction covered by a second series of two or more tapes of superconducting material (7, 8, 9) wounded in the opposite direction, said tapes having a lay length between 20 cm and 300 cm with an angle ranging from 0 to 45°.

2. The superconducting power cable of claim 1,
**characterized in that** the first flexible corrugated pipe (1) forming the vacuum annular space is made of 304 or 316 stainless steel and has an external diameter of 6 to 8 cm and an internal diameter of 4 to 5 cm, the corrugation depth can vary between 0.5 and 1 cm and the corrugation pitch is from 1 to 2 cm for a depth between 0.5 and 0.8 cm.

3. The superconducting power cable of claim 1,
**characterized in that** the thermal insulation (12) placed in several layers is an aluminium and mylar sheet 0.0005 to 0.005 cm thick.

4. The superconducting power cable of claim 1,
**characterized in that** the second stainless steel corrugated pipe (11) has an external diameter between 8 and 10 cm and an internal diameter between 6 and 7 cm, with a corrugation depth between 0.5 and 1.5 cm, and a pitch between corrugations of 1 to 2 cm for a depth between 0.5 and 1 cm.

5. The superconducting power cables of claim 1,
**characterized in that** the conductivity of the first semi-conducting shield (15) does no exceed 1000 Ω m at room temperature and has a thickness of at least 0.006 cm.

6. The superconducting power cable of claim 1,
**characterized in that** the insulation (16) is based on thermoplastic or thermosetting or crossed chain low, medium or high density polyethylene and/or ethylene propylene, the thickness thereof depending on the effect of the operation voltage on the cable and being between 0.229 and 0.976 cm.

7. The superconducting power cable of claim 1,
**characterized in that** the second semiconducting shield (17) is made of the same components as the first semi-conducting shield (15) but its thickness is at least 0.0129 cm and its maximum volume resistivity is 500 Ω m at room temperature.

8. The superconducting power cable of claim 1,
**characterized in that** the metal shield of cooper tape (18) is 0.00635 cm thick, having a cross section area of at least 0.1 mm$^2$/mm.

9. The superconducting power cable of claim 1,
**characterized in that** the protecting cover (19) can be made of polyethylene o polyvinyl chloride (FVC), with a thickness between 0.203 and 0.279 cm.

10. The superconducting power cable of claim 1,
**characterized in that** the vacuum thermal insulation system functions at temperatures of 77 ° K and under a vacuum pressure of 10 mPa (milliPascal) .

**11.** The superconducting power cable of claim 1
**characterized in that** it further comprises one or two additional steel tapes 2,5 to 4 cm width and 0,001 to 0,002 cm thick, placed with spacing between the stainless steel mesh tapes (2) of o,1 to 0,15 cm.

**Patentansprüche**

**1.** Ein Supraleitungskabel mit einem verbesserten Supraleitungskern mit mindestens einer Phase, die über eine Stickstoffkühlung in der Vertiefung einer zentralen Röhre verfügt, welche aus einem ersten und einem zweiten röhrenförmigen Abschnitt besteht,
wobei der erste röhrenförmige Abschnitt ein flexibler Supraleitungskern ist, der aus einer ersten flexiblen gewellten zentralen Röhre (1) besteht, die mit Gewebebändern (2) aus rostfreiem Stahl beschichtet ist, überlagert von Schichten aus Kupferbändern (3), überlagert mit Schichten aus supraleitendem Material, die bei Windungswinkeln von 0 bis 45 Grad aufgewickelt sind, wobei die oben genannte Gesamtheit mit einem Band aus einem isolierenden Material (10) verbunden ist, während
der zweite röhrenförmige Abschnitt ein thermoisolierendes System ist, das den zentralen Kern schützt und aus einer zweiten flexiblen gewellten zentralen Röhre (11) aus rostfreiem Stahl konzentrisch gebildet ist, die mit einer mehrschichtigen Thermoisolierung (12) beschichtet ist, ergänzt mit einer zusätzlichen gewellten Röhre (13) aus rostfreiem Stahl, welche von der mehrschichtigen Thermoisolierung (12) durch ein thermoisolierendes Vakuum (20) getrennt ist, wobei die äußere Wand der gewellten Röhre (13) über ein Gewebe (14) aus rostfreiem Stahl verfügt, zum Zwecke der Anhaftung mehrerer Schichten, wobei die besagten Schichten gebildet sind aus; einem ersten halbleitenden Schild (15), das aus einem thermoplastischen oder thermohärtenden Polyethylen mit geringer Dichte hergestellt ist, einer Isolierung (16), einem zweiten halbleitenden Schild (17), einem Schild aus Metall, das aus einem Kupferband (18) besteht und einer Schutzbeschichtung (19) aus Polyethylen,
**dadurch gekennzeichnet, dass** die Schichten des supraleitenden Materials an der Spitze der Kupferbänder (3) eine Reihe von zwei oder mehreren Bändern aus supraleitendem Material (4, 5, 6) verfügt, die in einer Richtung umwickelt sind, bedeckt durch eine zweite Reihe von zwei oder mehreren Bändern aus supraleitendem Material (7, 8, 9), die in der entgegen gesetzten Richtung umwickelt sind, wobei die besagten Bändern eine Schichtlänge von 20 cm bis 300 cm mit einem Winkel von 0 bis 45° haben.

**2.** Das Supraleitungskabel nach Anspruch 1, **dadurch gekennzeichnet, dass** die erste flexible gewellte Röhre (1), welche das ringförmige Vakuum bildet, aus 304er oder 316er rostfreiem Stahl hergestellt ist, und über einen Außendurchmesser von 6 bis 8 cm und einen Innendurchmesser von 4 bis 5 cm verfügt, wobei die Wellentiefe von 0,5 bis 1 cm variieren kann und der Wellenabstand zwischen 1 bis 2 cm bei einer Tiefe von 0,5 bis 0,8 cm liegt.

**3.** Das Supraleitungskabel nach Anspruch 1, **dadurch gekennzeichnet, dass** die in mehreren Schichten angeordnete Thermoisolierung (12) eine Aluminium- und Mylar-Platte mit einer Dicke von 0,0005 bis 0,005 cm ist.

**4.** Das Supraleitungskabel nach Anspruch 1, **dadurch gekennzeichnet, dass** die zweite gewellte Röhre (11) aus rostfreiem Stahl einen Außendurchmesser von 8 bis 10 cm und einen Innendurchmesser von 6 bis 7 cm hat, wobei die Wellentiefe bei 0,5 bis 1,5 cm liegt und der Abstand zwischen den Wellen bei einer Tiefe von 0,5 bis 0,8 cm bei 1 bis 2 cm liegt.

**5.** Das Supraleitungskabel nach Anspruch 1, **dadurch gekennzeichnet, dass** die Leitfähigkeit des ersten halbleitenden Schildes (15) bei Raumtemperatur den Wert von 1.000 $\Omega$ nicht überschreitet und eine Dicke von mindestens 0,006 cm hat.

**6.** Das Supraleitungskabel nach Anspruch 1, **dadurch gekennzeichnet, dass** die Isolierung (16) aus einem thermoplastischen oder thermohärtenden oder vernetzten Polyethylen und/oder Ethylen-Propylen mit geringer, mittlerer oder hoher Dichte besteht, wobei deren Dicke von den Wirkungen der Betriebsspannung auf das Kabel abhängt, und zwischen 0,229 und 0,976 cm liegt.

**7.** Das Supraleitungskabel nach Anspruch 1, **dadurch gekennzeichnet, dass** das zweite halbleitende Schild (17) aus den gleichen Komponenten wie das erste halbleitende Schild (15) besteht, seine Dicke jedoch mindestens 0,0129 cm beträgt und sein spezifischer elektrischer Widerstand bei Raum Temperatur bei 500 $\Omega$ liegt.

8. Das Supraleitungskabel nach Anspruch 1, **dadurch gekennzeichnet, dass** das Schild aus Metall mit dem Kupferband (18) 0,00635 cm dick ist, und über einen Querschnittsbereich von mindestens 0,1 mm$^2$/mm verfügt.

9. Das Supraleitungskabel nach Anspruch 1, **dadurch gekennzeichnet, dass** die Schutzbeschichtung (19) aus Polyethylen oder aus Polyvinylchlorid (PVC) hergestellt sein kann, mit einer Dicke von 0,203 bis 0,379 cm.

10. Das Supraleitungskabel nach Anspruch 1, **dadurch gekennzeichnet, dass** das thermoisolierende Vakuumsystem bei einer Temperatur von 77°K und bei einem Vakuumdruck von 10 mPa (MilliPascal) funktioniert.

11. Das Supraleitungskabel nach Anspruch 1, **dadurch gekennzeichnet, dass** es ferner über ein oder zwei zusätzliche Stahlbänder mit einer Breite von 2,5 bis 4 cm und einer Dicke von 0,001 bis 0,002 cm verfügt, welche mit einem Abstand zwischen den Gewebebändern (2) aus rostfreiem Stahl von 0,1 bis 0,15 cm angebracht sind.

**Revendications**

1. Un câble d'alimentation supraconducteur avec un noyau supraconducteur optimisé d'au moins une phase ayant un refroidissement par flux d'azote dans la cavité d'un tuyau central composé d'une première et d'une seconde sections tubulaires,
la première section tubulaire étant un noyau central supraconducteur flexible formé par un premier tuyau (1) central ondulé flexible enrobé de bandes (2) d'armature en treillis en acier inoxydable, revêtues de couches de rubans de cuivre (3), revêtues de couches de matériau supraconducteur enroulées à des angles de bobinage compris entre 0 et 45 degrés, l'ensemble mentionné ci-dessus étant assemblé avec une bande de matériau isolant (10), tandis que la seconde section tubulaire est un système d'isolation thermique protégeant le noyau central et elle est formée concentriquement par un second tuyau (11) en acier inoxydable, ondulé, flexible recouvert d'une isolation thermique multicouche (12), complétée par un tuyau (13) ondulé, en acier inoxydable, supplémentaire, séparé de l'isolation thermique multicouche (12) par un espace d'isolation thermique sous vide (20), la paroi externe du tuyau ondulé (13) ayant une armature en treillis (14) en acier inoxydable dans le but de faire adhérer plusieurs couches, lesdites couches étant formées par, un premier blindage semi-conducteur (15) fabriqué en polystyrène basse densité thermoplastique ou thermodurcissable, une isolation (16), un second blindage semi-conducteur (17), un blindage en métal composé d'un ruban de cuivre (18) et d'une enveloppe de protection (19) fabriquée en polyéthylène, **caractérisé en ce qu'**au-dessus des rubans de cuivre (3) de la première section tubulaire, les couches de matériau supraconducteur comprennent une série de deux ou plusieurs bandes de matériau supraconducteur (4, 5, 6) enroulées dans un sens recouvertes par une seconde série de deux ou plusieurs bandes de matériau supraconducteur (7, 8, 9) enroulées dans le sens opposé, lesdites bandes ayant une longueur de pas allant de 20 cm à 300 cm avec un angle compris entre 0 et 45°.

2. Le câble d'alimentation supraconducteur de la revendication 1, **caractérisé en ce que** le premier tuyau ondulé flexible (1) formant l'espace annulaire sous vide est fabriqué en acier inoxydable 304 ou 316 et possède un diamètre externe de 6 à 8 cm et un diamètre interne de 4 à 5 cm, la profondeur d'ondulation peut varier entre 0,5 et 1 cm et le pas d'ondulation varie de 1 à 2 cm pour une profondeur comprise entre 0,5 et 0,8 cm.

3. Le câble d'alimentation supraconducteur de la revendication 1, **caractérisé en ce que** l'isolation thermique (12) placée en plusieurs couches est une feuille en aluminium et mylar de 0,0005 à 0,005 cm d'épaisseur.

4. Le câble d'alimentation supraconducteur de la revendication 1, **caractérisé en ce que** le second tuyau (11) ondulé en acier inoxydable possède un diamètre externe compris entre 8 et 10 cm et un diamètre interne compris entre 6 et 7 cm, avec une profondeur d'ondulation allant de 0,5 à 1,5 cm, et un pas entre les ondulations de 1 à 2 cm pour une profondeur comprise entre 0,5 et 1 cm.

5. Les câbles d'alimentation supraconducteurs de la revendication 1, **caractérisés en ce que** la conductivité du premier blindage semi-conducteur (15) n'excède pas 1000 Ω m à température ambiante et **en ce qu'**il a une épaisseur d'au moins 0,006 cm.

6. Le câble d'alimentation supraconducteur de la revendication 1, **caractérisé en ce que** l'isolation (16) est basée sur un polyéthylène et/ou un éthylène-propylène de basse, moyenne ou haute densité thermoplastique, thermodurcissable ou à chaine croisée, dont l'épaisseur dépend de l'effet de la tension de fonctionnement sur le câble et se situe entre 0,229 et 0,976 cm.

**7.** Le câble d'alimentation supraconducteur de la revendication 1, **caractérisé en ce que** le second blindage semi-conducteur (17) est fabriqué dans les mêmes composants que le premier blindage semi-conducteur (15) mais que son épaisseur est de 0,0129 cm au moins et que sa résistivité de volume maximal est de 500 Ω m à température ambiante.

**8.** Le câble d'alimentation supraconducteur de la revendication 1, **caractérisé en ce que** le blindage en métal en ruban de cuivre (18) est de 0,00635 cm d'épaisseur, possédant une zone de section transversale de 0,1 mm$^2$/mm au moins.

**9.** Le câble d'alimentation supraconducteur de la revendication 1, **caractérisé en ce que** l'enveloppe de protection (19) peut être fabriquée en polyéthylène ou en polychlorure de vinyle (PVC), avec une épaisseur comprise entre 0,203 et 0,279 cm.

**10.** Le câble d'alimentation supraconducteur de la revendication 1, **caractérisé en ce que** le système d'isolation thermique sous vide fonctionne à des températures de 77° K et en dessous d'une pression sous vide de 10 mPa (millipascal).

**11.** Le câble d'alimentation supraconducteur de la revendication 1, **caractérisé en ce qu'**il comprend en outre une ou deux bandes en acier supplémentaires d'une largeur comprise entre 2,5 et 4 cm et d'une épaisseur allant de 0,001 à 0,002 cm, placées avec un écartement entre les bandes (2) d'armature en treillis d'acier inoxydable de 0,1 à 0,15 cm.

FIG. 1

FIG. 2

FIG. 3

FIG. 4

FIG. 5

EP 1 551 038 B1

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0039813 A
- JP 06239937 A
- US 5929385 A
- US 5952614 A

**Non-patent literature cited in the description**

- Design of superconducting power cables. CRYOGENICS, IPC SCIENCE AND TECHNOLOGY PRESS LTD, 01 September 1999, vol. 39, 767-775